Europäisches Patentamt

(19) European Patent Office

Office européen des brevets

(11) EP 0 461 256 B1

(12) # EUROPEAN PATENT SPECIFICATION

(45) Date of publication and mention
of the grant of the patent:
**26.03.1997 Bulletin 1997/13**

(21) Application number: **90901658.6**

(22) Date of filing: **04.01.1990**

(51) Int. Cl.$^6$: **B29C 55/00**, D02J 1/22,
D01F 6/60, D01F 6/62

(86) International application number:
**PCT/JP90/00002**

(87) International publication number:
**WO 91/09721 (11.07.1991 Gazette 1991/15)**

(54) **STRETCHED PLASTIC MOLDING AND METHOD FOR STRETCHING PLASTIC MOLDING**

GERECKTES KUNSTSTOFF-FORMTEIL UND VERFAHREN ZUM RECKEN VON KUNSTSTOFF-FORMTEILEN

ELEMENT MOULE EN PLASTIQUE ETIRE ET PROCEDE D'ETIRAGE D'ELEMENTS EN PLASTIQUE MOULE

(84) Designated Contracting States:
**DE FR GB IT**

(43) Date of publication of application:
**18.12.1991 Bulletin 1991/51**

(73) Proprietor: **TORAY INDUSTRIES, INC.**
**Tokyo 103 (JP)**

(72) Inventors:
• **KAI, Tsugihiko**
**Shiga 520 (JP)**
• **SEKI, Masao**
**Shiga 525 (JP)**
• **KAWAI, Fumiko**
**Shiga 525 (JP)**
• **KOIDE, Kazuyoshi**
**Shiga 525 (JP)**

(74) Representative: **Coleiro, Raymond**
**MEWBURN ELLIS**
**York House**
**23 Kingsway**
**London WC2B 6HP (GB)**

(56) References cited:
JP-A- 5 716 915          JP-A- 6 034 615
JP-A-60 228 545          JP-B- 6 024 852

• **DATABASE WPIL, section Ch, week 9129, class A, AN=91-213239, Derwent Publications Ltd, London, GB; & JP-A-3 137 219 (TORAY IND.) 11-06-1991**
• **DATABASE WPIL, section Ch, week 9014, class A, AN=90-103303, Derwent Publications Ltd, London, GB; & JP-A-2 053 932 (TORAY IND.) 22-02-1990**
• **CHEMICAL ABSTRACTS, vol. 101, no. 10, abstract no. 73913p, Columbus, Ohio, US; & JP-A-59 067 015 (TOAY IND.) 16-04-1984**
• **CHEMICAL ABSTRACTS, vol. 108, no. 8, abstract no. 57414r, Columbus, Ohio, US; & JP-A-62 080 023 (TORAY IND.) 13-04-1987**

**Description**

The present invention relates to a drawn plastic product with high strength, high modulus and excellent thermal dimensional stability and a method for preparing it.

Up to the present time, for preparing a high strength plastic product, especially for preparing high strength fiber and film for industrial applications, the following procedures have been used, namely increasing the degree of polymerization by means of solid state polymerization, a special drawing method, for example, a zone heat treatment and drawing, and a method of drawing by means of induction heating.

However, for example, in the zone heat treatment and drawing method, a complicated installation arrangement of apparatus, such as to provide, for example, high temperature heating, quenching and high temperature heat setting, is necessary and a small change in balance between heating and cooling results in fluctuation of fiber characteristics. In addition, structural defects easily occur by both extreme treatments consisting of quick heating and quick cooling and it is difficult to satisfy both high strength and high modulus at the same time.

A drawing technique is also known (JP-A-59-67015) for biaxially drawn films intended for use as base films in magnetic recording media. In this technique, a first drawing operation is carried out simultaneously with or prior to a corona discharge treatment at a pressure just above atmospheric, which is in turn followed by a second drawing operation. This provides the film with an arrangement of projections and depressions which confer upon the film, inter alia, high electromagnetic conversion property.

On the other hand, the present invention offers a plastic product with high strength, high modulus and high thermal dimensional stability and a convenient method for preparing it in a stable manner.

According to one aspect, the present invention provides a method of drawing of a plastic product characterized in that, during the drawing, the plastic product is subjected to a low temperature gas discharge treatment in an atmosphere of 0.01 to 50 torr.

Furthermore, according to another aspect, the present invention provides a polyester fiber having, in combination, the following characteristics (1)-(7):

(1) Inherent viscosity: 0.8 or smaller
(2) Tensile strength: 7.0 g/d or larger
(3) Initial modulus: 140 g/d or larger
(4) Values of long range period obtained by means of X-ray diffraction satisfy the following relation:

$$De > Dm$$

wherein De is the value of the long range period in the equatorial direction; Dm is the value of the long range period in the meridional direction
(5) Density $(g/cm^3)$: 1.3800 or larger
(6) Shrinkage in boiling water: 5% or smaller
(7) Dry heat shrinkage at 150°C: 5% or smaller.

According to a further aspect, the present invention provides a polyamide fiber, at least 75% or more repeating units of which polyamide consist of capramide units, which fiber has, in combination, the following characteristics (1)-(7):

(1) Relative viscosity: 3.0 or smaller
(2) Tensile strength: 6 g/d or larger
(3) Initial modulus: 35 g/d or larger
(4) Elongation at break: 16% or smaller
(5) Birefringence: $55 \times 10^{-3}$ or larger
(6) Density: 1.1400 or larger
(7) Shrinkage in boiling water: 8% or smaller.

A drawn plastic product with high strength, high modulus and high thermal dimensional stability can be prepared stably by the method of the present invention.

Most preferred embodiments of invention will now be described.

The plastic product drawn by a method of the present invention may be any product such as a fibrous, film-like or rod-like product. When a thermoplastic polymer is used as the raw material of the plastic, the effect of the present invention can be remarkably exhibited.

One representative example of the thermoplastic polymers is a polyester polymer, for example, polyethylene terephthalate, polybutylene terephthalate or a material obtained by copolymerizing or blending a third ingredient, for example, isophthalic acid sulfonate, adipic acid, isophthalic acid or polyethylene glycol therewith.

Another representative example of a thermoplastic polymer is a polyamide polymer. A preferred such polyamide polymer has repeating units 75% or more of which are capramide units or hexamethylene adipamide units and examples are nylon-6, nylon-6,6, nylon-6,10, nylon-6,12, nylon-7, nylon-11 and nylon-12, nylon-6 and nylon-6,6 being especially preferred.

Furthermore, other thermoplastic polymers of the plastic product to be drawn are such polymers as polyethylene, polyvinyl chloride, polyvinyl alcohol and fluoropolymers such as polyvinylidene fluoride.

In these polymers, catalysts, color protection agents, anti-oxidants, ultraviolet absorbing agents, flame-retardants and inorganic fine particles etc., can be suitably incorporated.

Any molding method can be used for molding these polymers. When the product is fibrous, these polymers are usually at first made into chips, which are then melted, extruded from an orifice, cooled and wound up.

These fibrous products may consist of a single polymer or two or more different polymers in the crosssectional direction such as a core-sheath structure, a side-by-side structure or an amorphously arranged structure seen in a polymer alloy.

In addition, the crosssectional shapes of these fibrous products may be close to a circle as well as an ellipse, a polygon or a hollow structure. No limitation exists on the crossectional shape of the product to be drawn by the method of the present invention. These fibrous products can be used as they are, but those products which are drawn at ordinary temperature or while they are heated by means of a hot plate, a hot roller, a high temperature gas, a high temperature liquid etc., or after heating or are furthermore heated after drawing can be used.

In addition, when the product is sheet-like, it is usually obtained by heating the polymer at their melting temperature or higher to bring it to a molten state, extruding it from a slit-like orifice and cooling and winding the extruded sheet. In the method of the present invention, these sheet-like products can be used as they are, but those products which are drawn at ordinary temperature or while heated by means of a hot plate, a hot roller, a high temperature gas, a high temperature liquid etc., or after heating in the continuous direction and/or the width direction or furthermore heated after drawing can be used. These sheet-like products may consist of a single polymer or two or more different polymers in the width direction and/or the thickness direction.

In the method of the present invention, it is a feature that these plastic products are drawn in a low temperature plasma provided by a glow discharge.

The low temperature plasma of the present invention is generated by applying a high electric voltage in a vacuum container wherein a specified gas is sealed.

As the electric discharge, a glow discharge with uniform discharge and excellent activation action is especially preferable. As the discharge frequency, low frequency, high frequency and microwave can be used and direct current can also be used.

As a gas providing activation, for example, non-polymerizable gases such as Ar, $N_2$, He, $CO_2$, CO, $O_2$, $H_2O$, $CF_4$, $NH_3$, $H_2$ and air are preferable and a mixture of two or more thereof can be also used. Ar, He, $N_2$, air, CO and $H_2O$ with no strong etching action are especially preferable. In addition, from the viewpoints of economy and ease of handling, air is especially preferable.

Having regard to both economy and stability of electric discharge, the low temperature plasma treatment is performed at a gas pressure of 0.01-50 Torr, preferably 0.5-20 Torr. Namely, when the gas pressure is 0.01 Torr or lower, a strong vacuum pump is required to keep a high vacuum and the costs for installation and electric power for it are high. On the contrary, when the gas pressure is 50 Torr or higher, electric discharge is unstable and in addition, as application of an electric energy of an extremely high pressure is required to generate electric discharge, it is not preferable from the viewpoint of electric power consumption.

The surface of the plastic product of the present invention is provided as a matter of course with an oxygen-containing group bound with a surface molecule such as a carbonyl group, carboxyl group, hydroxyl group and hydroxyperoxide group by drawing it in the low temperature plasma. In addition, depending on the kind of the gap used, a nitrogen-containing group is produced and SR characteristics and water-absorbing characteristics are simultaneously provided. A polymerizable gas such as $C_2F_4$ and trimethoxysilane forms a polymerized film on the surface of a plastic to obstruct drawability in some cases, but for providing characteristics such as water repellency, it is possible to use one of these gases alone, or a mixed gas of two or more thereof or a mixture of one or more of these polymerizable gases with one or more nonpolymerizable gases.

No limitation exists on an apparatus for practicing the present invention. A batch type apparatus wherein a drawing apparatus is combined in a vacuum container and a continuous type apparatus wherein a sealing type is used and a product under treatment and drawn air-to-air can be used. In addition, before or after a low temperature plasma drawing zone, if necessary, a heating apparatus such as a hot plate, a hot roller and a hot fluid zone can be connected and a cooling apparatus such as a low temperature plate, a low temperature roller and a low temperature fluid zone can be also connected.

When a plastic product, which may be an undrawn product, a semi-drawn product or a previously drawn product, is drawn by means of the method of drawing of the present invention, it is one of the features that the draw ratio just before breakage (hereinbelow described as a limiting draw ratio) becomes remarkably higher than the limiting draw ratio of the conventional method of drawing and it is thereby possible to obtain a drawn product with high strength, high modulus and excellent low shrinkage which has not been obtained at all by the conventional method of drawing. This could be because the polymer molecules in the plastic product are remarkably activated by means of the low temperature plasma and an extremely smooth drawing can be performed thereby.

In general, to obtain a high tenacity product, various devices to enlarge the degree of polymerization such as extending polymerization time and performing a solid state polymerization are performed but the manufacturing cost becomes higher in proportion thereto. However, when a polyester fibrous product is drawn by means of the method of drawing of the present invention, even if a polymer with an inherent viscosity of 0.8 or lower which can be manufactured with a low manufacturing cost is used, a drawn product with higher strength, higher modulus and smaller thermal shrinkage than those of the drawn product obtained by drawing a polyester fibrous product with a high degree of polymerization of an inherent viscosity of 0.8 or larger by means of the conventional method of drawing can be easily obtained. More particularly, even if a polyester fibrous product with an inherent viscosity of 0.8 or smaller is used, a fibrous product which exhibits not only extremely high tensile characteristics such as a tensile strength of 7.0 g/d or higher and an initial modulus of 140 g/d but also extremely high dimensional stability such as a boiling water shrinkage of 5% or lower and a dry heat shrinkage at 150°C of 5% or lower can be obtained. In general, to obtain high tenacity and high modulus, drawing with a high drawing ratio is usually performed but a polyester fiber thus obtained usually exhibits high boiling water shrinkage or high dry heat shrinkage. On the contrary, to suppress shrinkage considerably, a relaxed heat treatment is usually performed, but in this case, only a polyester fiber product with a low strength and a low initial modulus is ordinarily obtained. By the present invention, it is possible to prepare inexpensively a polyester fiber product satisfying simultaneously high tensile characteristics and high dimensional stability which has not been obtained by the conventional technologies.

Furthermore, by the drawing method of the present invention, even if the inherent viscosity of a polyester fiber product is 0.8 or smaller, it is a feature that a fiber with a density of 1.3800 g/cm$^3$ can be obtained. By using a polyester fiber product with an inherent viscosity of 0.8 or lower, it is usually not easy to obtain such a high density as this and therefore, it is difficult to obtain the high tensile characteristics.

In addition, by the drawing method of the present invention, even if the inherent viscosity of the polyester fiber product is 0.8 or smaller, a fiber product wherein the value of the long range period in the equatorial direction of the crystal De obtained by means of X-ray diffraction is larger than the value of the long range period in the meridional direction is obtained. In a polyester fiber product with an inherent viscosity of 0.8 or smaller, De is usually smaller than Dm and it is thought that one of the reasons why the polyester fiber product obtained by the present invention exhibits excellent tensile characteristics is based on the unique characteristics of this crystal structure.

This feature can be seen in drawing of a polyamide fiber product. When an undrawn product, a semi-drawn product or a drawn product of a polyamide fiber is drawn, even if a polymer with a relative viscosity of 3.0 or smaller which is manufactured inexpensively is used, a drawn product with higher strength, higher modulus and smaller thermal shrinkage than those of a drawn product drawn by means of the conventional method can be easily obtained. More particularly, even if a polyamide fiber product with a relative viscosity of 3.0 or smaller is used, a fiber product exhibiting not only extremely high values such as a tensile strength of 6.0 g/d or larger and an initial modulus of 35 g/d but also extremely high dimensional stability such as a boiling water shrinkage of 8% or smaller can be obtained. Furthermore, by the drawing method of the present invention, even if the relative viscosity of the polyamide fiber is 3.0 or smaller, a density of 1.14 g/cm$^3$ or larger and a birefringence of 55 x 10$^{-3}$ or larger can be obtained. In the case of a polyamide fiber with a relative viscosity of 3.0 or smaller, it is usually not easy to obtain such a high density as this and it is therefore difficult to obtain the high tensile characteristics.

Embodiments of the present invention will now be described in more detail with reference to the following Examples.

In addition, physical properties and internal structural parameters of fibers shown in Examples and Comparative Examples were measured by the following methods.

(1) Tensile strength, elongation at break and initial modulus (initial tensile resistance)

These values were measured according to JIS-L1017. Namely, a sample was taken as a hank and after the hank was kept standing in a room where temperature and moisture were conditioned at 20°C and 65%RH for 24 hr or longer, then using a tensile tester "Tensilon ULT-4L" (manufactured by Toyo Bowldwin Co., Ltd.), measurements were performed under conditions of a sample length of 25 cm and a tensile speed of 30 cm/min.

(2) Boiling water shrinkage ΔS

A sample was taken as a hank and after the hank was kept standing in a room conditioned at 20°C and 65%RH for 24 hr or longer, a sample with a length $L_0$ measured under a load corresponding to 0.1 g/d of the sample was put in a fabric bag and treated in boiling water in an unstretched state for 30 min. After the treatment, the sample was air-dried and thereafter kept standing in the temperature and humidity conditioned room for 24 hr or longer. The length L measured under the above load was measured and the value was calculated by the following equa-

tion.

$$\Delta S\ (\%) = \{(L_0 - L)/L_0\} \times 100$$

(3) Dry heat shrinkage

A sample was taken in a hank shape and after the sample had been kept standing in a room where the temperature and the humidity were conditioned at 20°C and 65%RH for 24 hr or longer, a sample with a length $L_0$ measured under a load corresponding to a load of 0.1 g/d of the sample was treated in an oven at 150°C for 30 min in an unstretched state. The sample after treatment was allowed to cool and kept standing in the temperature and humidity conditioned room for 24 hr or longer. The length L was measured under the above load and the value was calculated by the following equation.

$$\Delta S\ (\%) = \{(L_0 - L)/L_0\} \times 100$$

(4) Inherent viscosity (IV)

A sample was dissolved in an o-chlorophenol solution and the IV was measured at 25°C using an Ostwald viscometer.

(5) Relative viscosity

1 g sample was dissolved in 98% sulfuric acid and the relative viscosity was measured at 25°C using an Ostwald viscometer.

(6) Birefringence

Using a POH type polarized microscope manufactured by Nippon Kagaku K.K., it was measured by the ordinary Berek compensator method.

(7) Density

Using a density gradient tube prepared using carbon tetrachloride as a heavy liquid and n-heptane as a light liquid, it was measured at 25°C.

(8) Long range period

Values in the equatorial direction (De) and in the meridional direction (Dm) were obtained from a small angle X-ray scattering photograph.

Photographing conditions of small angle X-ray scattering

X-ray generating apparatus:

RU-Type 200 manufactured Rigaku Corporation

X-ray source:     $CuK\alpha$ ray (Ni filter was used)
Output:           50 kV 150 mA
Slit system:      0.3 mm$\varnothing$

Photographing condition:

Radius of camera:    400 mm
Exposure time:       120 min
Film:                Kodak DEF-5

Examples 1 - 6, Comparative Examples 1 - 4

A semi-drawn filament of polyethylene terephthalate of 140 denier and having 24 filaments was obtained by means of a well known melt spinning process with a spinning speed of 3,000 m/min. The inherent viscosity of the filament was 0.63. Drawing of this filament was performed under the following conditions by means of a continuous processing type plasma treating machine with a sealing mechanism at both ends.

(Low temperature plasma conditions)

Gas used:                 Air
Frequency:                110 kHz
Treating pressure:        8, 10 Torr
Applied electric voltage: 3, 4 kV

Physical properties of drawn filaments drawn in a plasma atmosphere were as shown in Table 1.

As Comparative Examples, samples without drawing in a plasma atmosphere but drawn using hot plates at 90°C and 150°C (Comparative Examples 1 and 2), a sample cold-drawn without using a hot plate (Comparative Example 3) and a sample cold-drawn under a vacuum of 10 Torr (Comparative Example 4) (each the samples was drawn at its limiting drawing ratio) were prepared and physical properties of each filament were as shown in Table 1.

Filaments drawn in a plasma atmosphere exhibited high tenacity and high modulus which were the some level as those of an ordinary filament using a raw material with a high degree of polymerization and thus a filament of high quality having simultaneously such characteristics as high crystallinity and low shrinkage was obtained. In addition, in the drawing performed in a plasma atmosphere, drawability was improved remarkably. Examples 7 - 11, Comparative Examples 5 - 6

An undrawn filament of 240 denier and having 24 filaments was obtained by spinning, using a well known melt spinning process, of a nylon 6 chip with a relative viscosity of 2.6 at a spinning speed of 900 m/min. Drawing of this filament was performed in the following atmosphere by using a continuous processing type plasma treating machine with a seal mechanism at both ends.

(low temperature plasma conditions)

| | |
|---|---|
| Gas used: | Air |
| Treating pressure: | 10 Torr |
| Frequency: | 110 kHz |
| Applied electric voltage: | 3, 4 kV |

Physical properties of the drawn filaments drawn in a plasma atmosphere were as shown in Table 2. As can be seen, high strength, high modulus, low elongation, high orientation and low shrinkage were simultaneously achieved for the filaments drawn by the method of the present invention.

By way of comparison, in Comparative Example 5, a filament was drawn at a limiting draw ratio by means of an ordinary method without using a hot plate, while in Comparative Example 6, a sample was drawn using a hot plate at 100°C. Physical properties of the resultant products were as shown in Table 2. As can be seen, these compare unfavourably with the properties of filaments drawn by the method of the invention.

Examples 12 - 13, Comparative Example 7

A semi-drawn filament of 105 denier and having 24 filaments was obtained by spinning, using an ordinary melt spinning process, of a nylon 6 chip with a relative viscosity of 2.6 at a spinning speed of 2,300 m/min. Plasma drawings of this filament were performed under conditions shown in Table 3 using the same apparatus as that in Examples 1 - 5 and physical properties of the filaments were as shown in Table 3. As can be seen high strength, high modulus, low elongation, high orientation and low shrinkage were simultaneously achieved for the filaments drawn by the method of the present invention.

In Comparative Example 7, physical properties of a filament drawn at a limiting draw ratio under ordinary cold drawing conditions were measured and were as shown in Table 3. As can be seen, these compare unfavourably with the properties of filaments drawn by the method of the invention.

In summary, a drawn plastic product with high strength, high modulus and high thermal dimensional stability can be stably manufactured by methods of drawing embodying the present invention.

EP 0 461 256 B1

Table 1

| | Drawing conditions | | | | | | | Physical properties of drawn fibers | | |
|---|---|---|---|---|---|---|---|---|---|---|
| | | | Plasma condition | | | | | | | |
| | Drawing speed (m/min) | Drawing ratio (fold) | Gas | Pressure (Torr) | Applied electric voltage (kV) | Heating temp. (°C) | Pressure (Torr) | Denier (D) | Tenacity (g/d) | Elongation (%) |
| Example 1 | 50 | 2.0 | Air | 10 | 4 | – | – | 69.5 | 7.1 | 15.9 |
| Example 2 | 50 | 2.1 | Air | 10 | 4 | – | – | 68.0 | 7.4 | 11.9 |
| Example 3 | 50 | 2.2 | Air | 10 | 4 | – | – | 64.2 | 8.9 | 10.2 |
| Example 4 | 50 | 2.6 | Air | 10 | 3 | – | – | 56.0 | 9.3 | 6.9 |
| Example 5 | 50 | 2.6 | Air | 10 | 4 | – | – | 55.9 | 9.4 | 6.5 |
| Example 6 | 50 | 2.6 | Air | 8 | 4 | – | – | 55.1 | 9.4 | 6.6 |
| Comparative Example 1 | 50 | 2.1 | – | – | – | 90 | – | 67.9 | 5.2 | 28.5 |
| Comparative Example 2 | 50 | 2.1 | – | – | – | 150 | – | 68.2 | 6.3 | 11.7 |
| Comparative Example 3 | 50 | 2.0 | – | – | – | Cold | – | 69.7 | 5.0 | 13.8 |
| Comparative Example 4 | 50 | 2.0 | – | – | – | – | 10 | 70.2 | 5.8 | 14.0 |

Table 1 (continued)

| | Physical properties of drawn fibers | | | | | | | |
|---|---|---|---|---|---|---|---|---|
| | Modulus of Elasticity (g/d) | Birefringence ($\times 10^{-3}$) | Density ($g/cm^3$) | Inherent viscosity $[\eta]$ | Long range period (Å) | | Boiling water shrinkage (%) | Dry heat shrinkage (%) |
| | | | | | De | Dm | | |
| Example 1 | 141 | 174.4 | 1.3830 | 0.644 | 190 | 140 | 4.1 | 4.9 |
| Example 2 | 140 | 175.2 | 1.3906 | 0.647 | 228 | 140 | 3.3 | 4.5 |
| Example 3 | 145 | 178.4 | 1.4005 | 0.639 | 180 | 140 | 3.1 | 4.1 |
| Example 4 | 158 | 179.8 | 1.4116 | 0.636 | 175 | 140 | 3.3 | 4.5 |
| Example 5 | 168 | 188.2 | 1.4010 | 0.639 | 168 | 140 | 3.1 | 4.8 |
| Example 6 | 163 | 180.6 | 1.3995 | 0.635 | 179 | 140 | 3.1 | 5.0 |
| Comparative Example 1 | 100 | 148.2 | 1.3795 | 0.632 | 102 | 140 | 8.0 | 10.5 |
| Comparative Example 2 | 110 | 171.4 | 1.3826 | 0.642 | 123 | 140 | 5.3 | 9.0 |
| Comparative Example 3 | 90 | 138.9 | 1.3705 | 0.630 | 100 | 140 | 19.5 | 18.5 |
| Comparative Example 4 | 95 | 159.6 | 1.3812 | 0.632 | 112 | 140 | 13.5 | 17.2 |

EP 0 461 256 B1

EP 0 461 256 B1

Table 2

| | Drawing conditions | | | | | Physical properties of drawn fibers | | | | | | | |
|---|---|---|---|---|---|---|---|---|---|---|---|---|---|
| | Drawing speed (m/min) | Draw-ing ratio (fold) | Gas | Pres-sure (Torr) | Applied electric voltage (kV) | Denier (D) | Tena-city (g/d) | Elonga-tion (%) | Modulus of elas-ticity (g/d) | Bire-frin-gence $\times 10^{-3}$ | Density (g/cm$^3$) | Relative viscosity | Boiling water shrinkage (%) |
| Example 7 | 50 | 3.5 | Air | 10 | 3 | 68.9 | 6.2 | 15.9 | 38 | 55.4 | 1.140 | 2.68 | 7.9 |
| Example 8 | 50 | 4.0 | Air | 10 | 3 | 60.0 | 7.4 | 14.6 | 42 | 56.9 | 1.141 | 2.70 | 7.8 |
| Example 9 | 50 | 4.0 | Air | 10 | 4 | 59.8 | 7.9 | 13.5 | 42 | 58.1 | 1.141 | 2.69 | 7.5 |
| Example 10 | 50 | 4.5 | Air | 10 | 4 | 53.9 | 8.2 | 12.5 | 44 | 60.1 | 1.142 | 2.71 | 7.6 |
| Example 11 | 50 | 5.0 | Air | 10 | 4 | 49.2 | 8.7 | 10.1 | 52 | 62.9 | 1.142 | 2.71 | 7.2 |
| Comparative Example 5 | 50 | 3.5 | (Cold drawing) | | | 69.2 | 4.8 | 42.7 | 27 | 52.1 | 1.138 | 2.70 | 12.5 |
| Comparative Example 6 | 50 | 4.0 | (Hot plate drawing at 100°C) | | | 60.8 | 5.0 | 39.8 | 29 | 53.6 | 1.138 | 2.72 | 12.0 |

Table 3

| | Drawing conditions | | | | | Physical properties of drawn fibers | | | | | | | |
|---|---|---|---|---|---|---|---|---|---|---|---|---|---|
| | Drawing speed (m/min) | Drawing ratio (fold) | Gas | Pressure (Torr) | Applied electric voltage (kV) | Denier (D) | Tenacity (g/d) | Elongation (%) | Modulus of elasticity (g/d) | Birefringence $\times 10^{-3}$ | Density (g/cm³) | Relative viscosity | Boiling water shrinkage (%) |
| Example 11 | 50 | 1.5 | Air | 7 | 3 | 70.8 | 7.2 | 10.9 | 36 | 55.4 | 1.143 | 2.62 | 7.6 |
| Example 13 | 50 | 1.8 | Air | 7 | 3 | 58.0 | 8.9 | 10.5 | 45 | 59.1 | 1.148 | 2.60 | 7.6 |
| Comparative Example 7 | 50 | 1.5 | (Cold drawing) | | | 71.2 | 5.7 | 22.8 | 21 | 52.9 | 1.139 | 2.62 | 12.1 |

**Claims**

1. A method of drawing a plastic product characterized in that, during the drawing, the plastic product is subjected to a low temperature glow discharge treatment in an atmosphere at a pressure of 0.01 to 50 Torr.

2. A method according to Claim 1, wherein the plastic product is a fiber.

3. A method according to Claim 1, wherein the plastic product is a film.

4. A method according to any preceding Claim, wherein the plastic product is a polyester product.

5. A method according to any one of Claims 1 to 3, wherein the plastic product is a polyamide product.

6. A polyester fiber having, in combination, the following characteristics (1) - (7):

(1) Inherent viscosity: 0.8 or smaller
(2) Tensile strength: 7.0 g/d or larger
(3) Initial modulus: 140 g/d or larger
(4) Values of long range period obtained by means of X-ray diffraction satisfy the following relation:

$$De > Dm$$

wherein De is the value of the long range period in the equatorial direction; Dm is the value of the long range period in the meridional direction
(5) Density (g/cm$^3$): 1.3800 or larger
(6) Shrinkage in boiling water: 5% or smaller
(7) Dry heat shrinkage at 150°C: 5% or smaller.

7. A polyester fiber according to Claim 6, which is a polyethylene terephthalate fiber.

8. A polyamide fiber at least 75% or more repeating units of which polyamide consist of capramide units, which fiber has, in combination, the following characteristics (1) - (7):

(1) Relative viscosity: 3.0 or smaller
(2) Tensile strength: 6 g/d or larger
(3) Initial modulus: 35 g/d or larger
(4) Elongation at break: 16% or smaller
(5) Birefringence: 55 x 10$^{-3}$ or larger
(6) Density: 1.140 or larger
(7) Shrinkage in boiling water: 8% or smaller.

**Patentansprüche**

1. Verfahren zum Recken eines Kunststoffprodukts, dadurch gekennzeichnet, daß während des Reckens das Kunststoffprodukt einer Niedertemperatur-Glimmentladungsbehandlung in einer Atmosphäre unter einem Druck von 0,01 bis 50 Torr ausgesetzt wird.

2. Verfahren nach Anspruch 1, worin das Kunststoffprodukt eine Faser ist.

3. Verfahren nach Anspruch 1, worin das Kunststoffprodukt ein Film ist.

4. Verfahren nach einem der vorhergehenden Ansprüche, worin das Kunststoffprodukt ein Polyesterprodukt ist.

5. Verfahren nach einem der Ansprüche 1 bis 3, worin das Kunststoffprodukt ein Polyamidprodukt ist.

6. Polyesterfaser, die eine Kombination der folgenden Eigenschaften (1) bis (7) aufweist:

(1) Eigenviskosität: 0,8 oder weniger;
(2) Zugfestigkeit: 7,0 g/d oder mehr;
(3) anfänglicher Elastizitätsmodul: 140 g/d oder mehr;
(4) mittels Röntgenbeugung erhaltene Long-range-Periodenwerte entsprechen der folgenden Beziehung: De > Dm, worin De der Long-range-Periodenwert in äquatorialer Richtung ist und Dm der Long-range-Periodenwert in meridionaler Richtung ist;

(5) Dichte (g/cm$^3$): 1,3800 oder mehr;

(6) Schrumpfung in kochendem Wasser: 5% oder weniger;

(7) Trockenwärmeschrumpfung bei 150°C: 5% oder weniger.

7. Polyesterfaser nach Anspruch 6, die eine Polyethylenterephthalat-Faser ist.

8. Polyamidfaser, wovon zumindest 75% oder mehr der wiederkehrenden Einheiten des Polyamids aus Capramideinheiten bestehen, welche Faser eine Kombination der folgenden Eigenschaften (1) bis (7) aufweist:

(1) relative Viskosität: 3,0 oder weniger;

(2) Zugfestigkeit: 6 g/d oder mehr;

(3) anfänglicher Elastizitätsmodul: 35 g/d oder mehr;

(4) Bruchdehnung: 16% oder weniger;

(5) Doppelbrechung: 55 x 10$^{-3}$ oder mehr;

(6) Dichte: 1,140 oder mehr;

(7) Schrumpfung in kochendem Wasser: 8% oder weniger.

**Revendications**

1. Méthode d'étirage d'un produit en plastique caractérisée en ce que pendant l'étirage le produit en plastique est soumis à un traitement à décharge luminescente à basse température dans un atmosphère à une pression de 0,01 à 50 torrs.

2. Méthode selon la revendication 1 où le produit en plastique est une fibre.

3. Méthode selon la revendication 1, où le produit en plastique est un film.

4. Méthode selon toute revendication précédente, où le produit en plastique est un produit de polyester.

5. Méthode selon l'une quelconque des revendications 1 à 3 où le produit en plastique est un produit de polyamide.

6. Fibre de polyester ayant, en combinaison, les caractéristiques (1) - (7) suivantes :

(1) Viscosité inhérente : 0,8 ou moins

(2) Résistance à la traction : 7,0 g/d ou plus

(3) Module initial : 140 g/d ou moins

(4) Des valeurs de la période à longue portée obtenues au moyen d'une diffraction des rayons X qui satisfont les relations suivantes :

$$De > Dm$$

où De est la valeur de la période à longue portée en direction équatoriale ; Dm est la valeur de la période à longue portée en direction méridionale

(5) Densité (g/cm$^3$) : 1,3800 ou plus

(6) Retrait dans l'eau bouillante : 5 % ou moins

(7) Retrait à la chaleur sèche à 150°C : 5 % ou moins.

7. Fibre de polyester selon la revendication 6, qui est une fibre de térephtalate de polyéthylène.

8. Fibre de polyamide dont au moins 75 % ou plus des unités récurrentes se composent d'unités de capramide, laquelle fibre a, en combinaison, les caractéristiques (1) - (7) ci-dessous :

(1) Viscosité relative : 3,0 ou moins

(2) Résistance à la traction : 6 g/d ou moins

(3) Module initial : 35 g/d ou plus

(4) Allongement à la rupture : 16 % ou moins

(5) Biréfringence : 55 x 10$^{-3}$ ou plus

(6) Densité : 1,140 ou plus

(7) Retrait dans l'eau bouillante : 8 % ou moins.